**Europäisches Patentamt**

**European Patent Office**

**Office européen des brevets**

(19)

(11) Veröffentlichungsnummer: **0 112 977**
**A1**

(12) # EUROPÄISCHE PATENTANMELDUNG

(21) Anmeldenummer: 83109799.3

(22) Anmeldetag: 30.09.83

(51) Int. Cl.³: **F 16 K 5/06**

(30) Priorität: 30.12.82 DE 3248704

(43) Veröffentlichungstag der Anmeldung:
11.07.84 Patentblatt 84/28

(84) Benannte Vertragsstaaten:
AT BE CH DE FR GB IT LI LU NL SE

(71) Anmelder: Tuflin Armaturen XOMOX International GmbH
Von-Behring-Strasse 15
D-8990 Lindau (B)(DE)

(72) Erfinder: Gonsior, Wolfgang
Von-Behring-Strasse 15
D-8990 Lindau (B)(DE)

(74) Vertreter: Riebling, Günter, Dr. Ing. et al,
Rennerle 10 Postfach 3160
D-8990 Lindau(DE)

(54) Absperrarmatur für aggressive Medien.

(57) Die Absperrarmatur für aggressive Medien besteht aus einem vom Medium durchflossenen Gehäuse, in dessen Durchflußquerschnitt zwischen zwei gehäusefesten Dichtringen abdichtend ein Absperrorgan angeordnet ist, wobei zwischen dem Absperrorgan und dem Gehäuse vom Medium beaufschlagte Toträume vorhanden sind. In der Offenstellung des Absperrorgans wird ein parallel zum Hauptfluß fliessender, den Totraum durchspülender, Nebenfluß vorgesehen, so daß eine Festsetzung des Mediums in solchen Toträumen nicht mehr vorkommt.

EP 0 112 977 A1

FIG 1

---------------------------------------------------

Absperrarmatur für aggressive Medien

---------------------------------------------------

Die Erfindung betrifft eine Absperrarmatur für aggressive Medien nach dem Oberbegriff des Patentanspruchs 1.

Bei derartigen Absperrarmaturen besteht ein konstruktiv bedingter Totraum zwischen dem Absperrorgan und dem Gehäuse bzw. den gehäusefesten Dichtringen. In Offenstellung wird dieser Totraum nicht durchspült und das in diesem Totraum befindliche aggressive Medium kann Polymerisieren, Auskristallisieren oder sonstwie seinen Zustand derart ändern, daß das Absperrorgan schließlich beim Übergang von der Offenstellung in die Schließstellung am Gehäuse festfrisst, und nur noch schwer oder überhaupt nicht mehr bewegbar ist. Hierbei besteht auch die Gefahr, daß die gehäusefesten Dichtringe beim Schließen des Absperrorgans beschädigt werden.

Aufgabe der Erfindung ist es, eine derartige Absperrarmatur nach dem Oberbegriff des Anspruchs 1 betriebssicherer zu gestalten.

Zur Lösung der gestellten Aufgabe ist die Erfindung dadurch gekennzeichnet, daß in der Offenstellung des Absperrorgans ein parallel zum Hauptfluß fliessender, den Totraum durchspülender Nebenfluß vorhanden ist.

Mit der Durchspülung des Totraumes in Offenstellung wird also eine Ablagerung des Mediums im Totraum verhindert und damit wird das gefürchtete Festfressen des Absperrorgans vermieden. Um ein Festfressen auch in Schließstellung zu vermeiden, ist es bekannt, entsprechende Entlastungsbohrungen im Absperrorgan vorzusehen, damit das im Absperrorgan noch befindliche Medium zur Abflußseite hin abfließen kann.

Man kann die konstruktive Ausbildung der vom Medium durchflossenen Toträume so gestalten, daß sie nur in einer bestimmten Offenstellung des Absperrorgans durchflossen werden, während sie beispielsweise bei noch nicht voll erreichter Offenstellung nicht durchflossen sind.

Bei einer bevorzugten Ausführungsform der vorliegenden Erfindung ist es vorgesehen, daß das Absperrorgan als Kugelküken ausgebildet ist und am Aussenumfang Abflachungen aufweist, die in der Offenstellung dem Totraum Durchflußkanäle zuordnen.

In Offenstellung wird also stets im Bypass zum Hauptfluß des Mediums ein Nebenfluß durch den sonst vorhandenen Totraum erzeugt.
Es gelingt also auf besonders einfache und kostengünstige Weise, eine solche Absperrarmatur wesentlich betriebssicherer zu gestalten. Statt der Ausbildung von Abflachungen am Kugelküken kann man auch von außen mit irgendeinem Spülsystem den Totraum durchströmen lassen.

Die vorher beschriebenen Abflachungen am Absperrorgan sind so ausgebildet, daß das Absperrorgan mit seinem Außenumfang von den gehäusefesten Dichtringen einen Abstand aufweist, und daß durch diesen Abstand bedingt ein Nebenfluß vom Hauptfluß des Mediums erzeugbar ist, welcher den Totraum durchspült.

In einer anderen Ausführungsform der vorliegenden Erfindung ist es vorgesehen, daß in der Offenstellung das Absperrorgan mit seinem Außenumfang dichtend an den gehäusefesten Dichtringen anliegt, wobei von der zentralen Durchgangsbohrung des Absperrorgans ausgehende, in den Totraum mündende Spülkanäle vorgesehen sind.

Um den Durchfluß durch den sonst vorhandenen Totraum zu verbessern, ist es vorgesehen, daß der stromaufwärts gelegene Spülkanal schräg in Richtung zum Medienstrom hin mit seiner Mündung geneigt ist, so daß das Medium unter hohem Druck in diesen Spülkanal eintritt, während der stromabwärts gelegene Spülkanal schräg in Gegenrichtung zur Medienströmung geneigt ist, so daß aus diesem Spülkanal vergleichsweise die Spülflüssigkeit abgesaugt wird.

Es liegt im Rahmen der vorliegenden Erfindung, daß das Absperrorgan entweder ein Kugelküken, ein Kegelküken oder ein Zylinderküken ist.

Der Erfindungsgegenstand der vorliegenden Erfindung ergibt sich nicht nur aus dem Gegenstand der einzelnen Patentansprüche , sondern auch aus der Kombination der einzelnen Patentansprüche untereinander.
Alle in den Unterlagen offenbarten Angaben und Merkmale, insbesondere die in den Zeichnungen dargestellte, räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1 Querschnitt durch ein Absperrorgan in einer
ersten Ausführungform,

Figur 2 Darstellung des Kugelkükens nach Figur 1 in
Schließstellung,

Figur 3 perspektivische Seitenansicht des Kugelkükens
nach Figur 1 und 2,

Figur 4 Schnitt durch das Kugelküken gemäss der Linie
IV-IV in Figur 5,

Figur 5 Seitenansicht des Kugelkükens gemäss Pfeil V

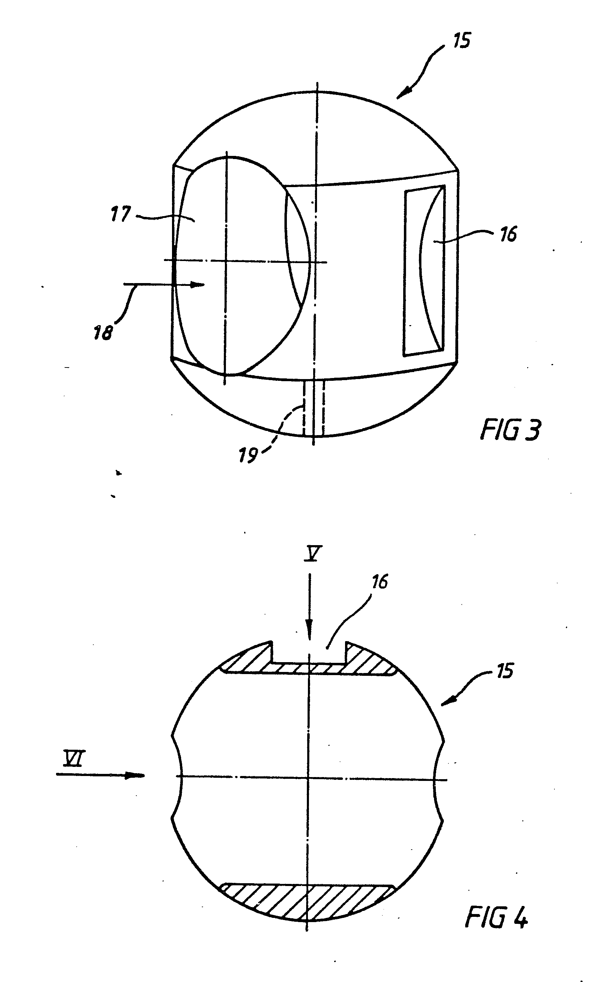

in Figur 4,

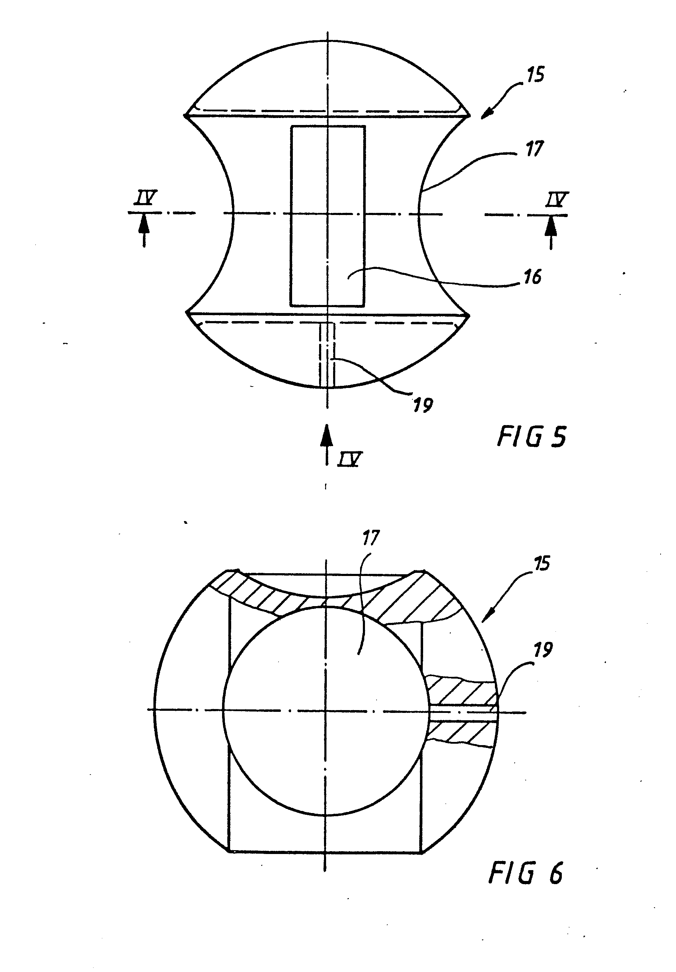

Figur 6 Schnitt durch das Kugelküken in einer anderen
Schnittführung,

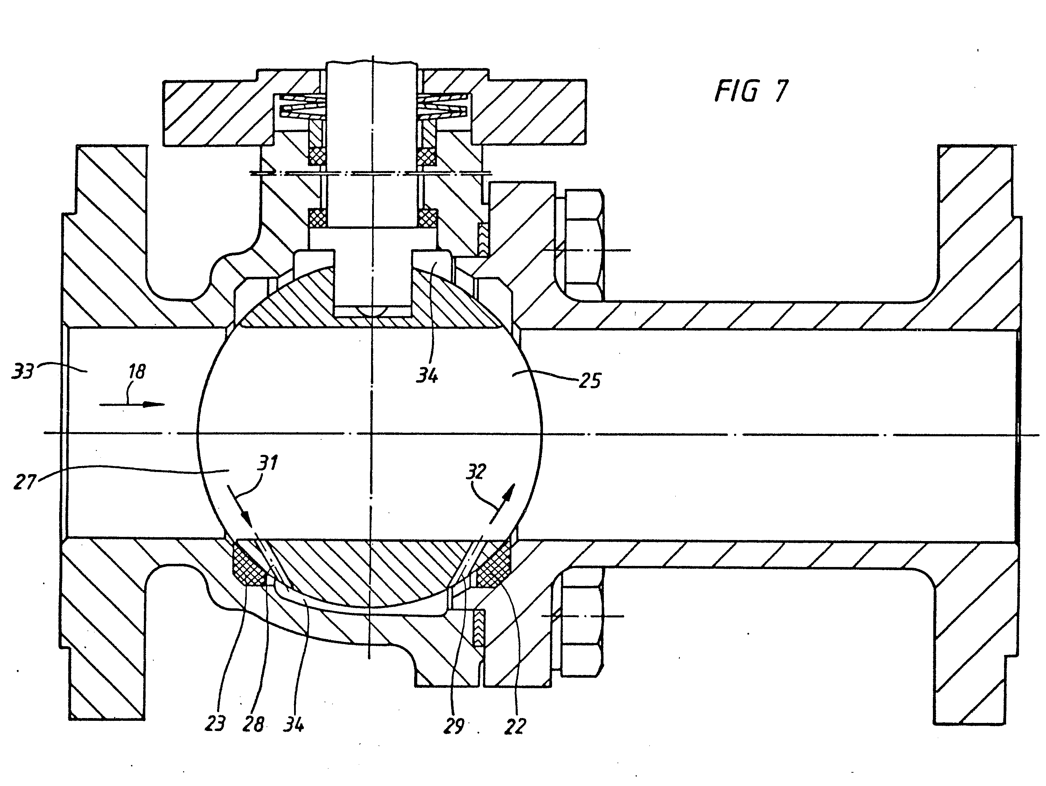

Figur 7 Schnittansicht durch ein zweites Ausführungsbeispiel eines Absperrorgans.

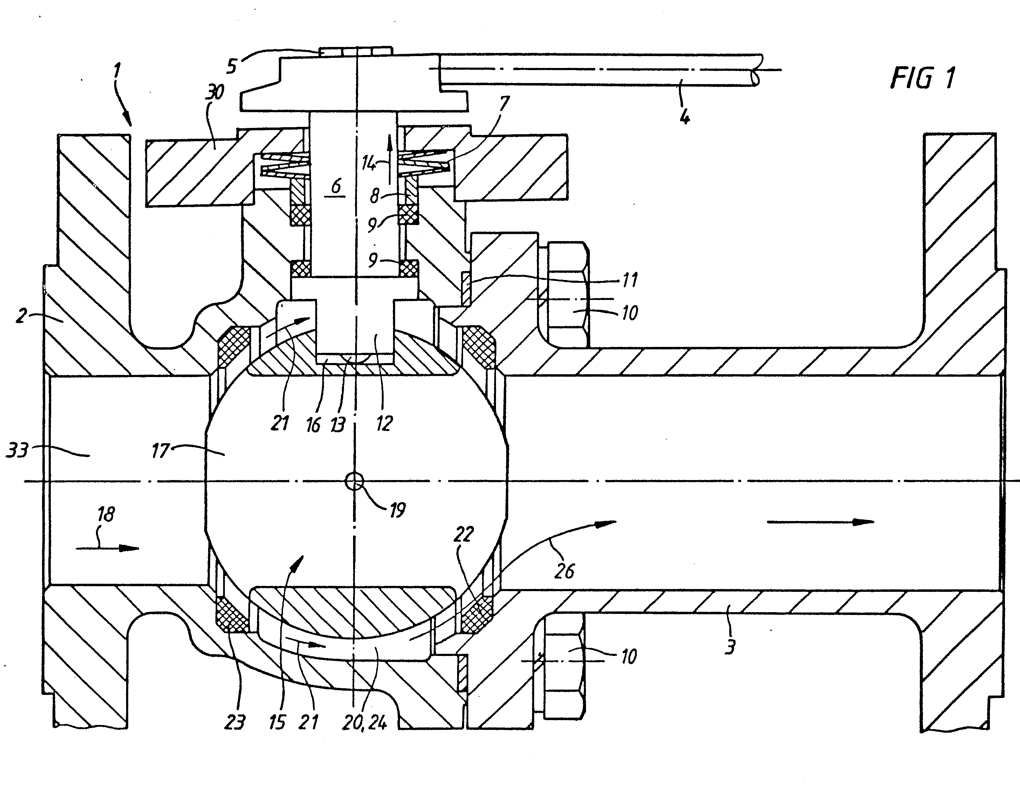

In Figur 1 ist ein zweiteiliges Gehäuse 1 gezeichnet, das
aus einem Hauptteil 2 und aus einem Ergänzungsteil 3
besteht. Hauptteil 2 und Ergänzungsteil 3 sind über vier
Verbindungsflansch-Schrauben 10 miteinander verbunden,
wobei entsprechende Flanschdichtungen 11 zwischengeschaltet sind.

Das Hauptteil 2 weist oben eine zentrale Ausnehmung auf,
in die der Schaft 6 eines Betätigungselementes eingreift,
wobei der Schaft 6 oben drehfest mit einem Betätigurgshebel 4 über eine Befestigungsschraube 5 verbunden ist.

Die Dichtungswirkung zwischen dem Schaft 6, dem Hauptteil 2 und dem Medienraum des Kugelhahns erfolgt dadurch, daß in einer zentralen Ausnehmung, die von einem Deckel 30 abgeschlossen ist, eine Tellerfeder 7 angeordnet ist, die über einen Metallring 8 auf eine darunter angeordnete Dichtpackung 9 drückt.

An der Unterseite des Schaftes 6 ist eine gleichartige Dichtpackung 9 angeordnet.

An der Stirnseite des Schaftes 6 ist ein Zweikant 12 angefräst, der über ein axial federbelastetes Druckstück 13 in Pfeilrichtung 14 nach oben gepresst wird, wobei das Druckstück 13 in einem Schlitz 16 eines Kugelkükens 15 angeordnet ist.

Die Abdichtung zwischen Zufluß und Abfluß übernimmt das Kugelküken 15 über die Dichtungsringe 22,23 zum Gehäuse 1.

Gemäss den Fig. 3 bis 6 besteht das Kugelküken 15 aus einem etwa sphärischen Körper, der eine zentrale Durchgangsbohrung 17 aufweist, durch welche das Medium in Pfeilrichtung 18 hindurchströmt.

Wesentliches Merkmal ist, daß im Bypass zu dem Hauptdurchgang des Kugelkükens ein Nebendurchgang geschaffen wird, in dem ein Nebenflußraum 20 vorhanden ist, der in Offenstellung des Kugelkükens von dem Mediumfluß in Pfeilrichtung 21 durchflossen ist. Dieser Nebenflußraum 20 erstreckt sich etwa ringförmig um das gesamte Kugelküken 15 herum.

In Offenstellung des Kugelkükens 15 gemäss Figur 1 strömt damit das Medium in Pfeilrichtung 21 durch diesen Nebenflußraum, spült diesen durch und verlässt den Nebenflußraum in Pfeilrichtung 26, wo sich dieser Durchfluß mit dem Hauptdurchfluß in Pfeilrichtung 18 vereinigt.

Es wird durch die Vereinigung dieser beiden Medienströme noch eine Saugwirkung auf den Nebenfluß im Nebenflußraum 20 erreicht, so daß hier hohe Durchtrittsgeschwindigkeiten erzielt werden. Der Spülungseffekt ist damit optimal.

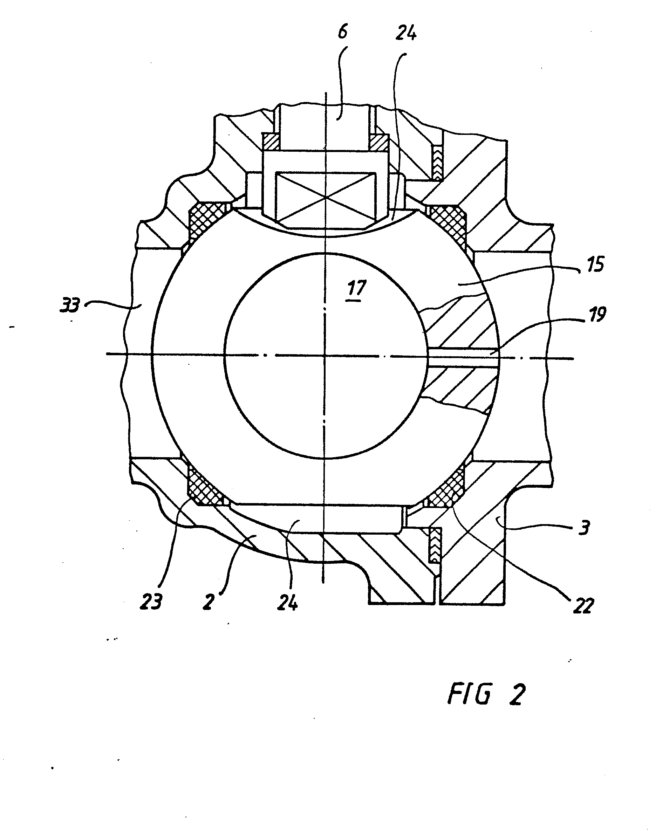

Zur Lösung der gestellten Aufgabe , daß man alle Toträume entlasten will und von einem Medium durchspülen will, kann in einer weiteren Ausbildung der vorliegenden Erfindung noch eine Entlastungsbohrung 19 auf der Abflußseite vorgesehen sein. Hierzu wird auf Figur 2 bezug genommen. Es ist ersichtlich, daß in Schließstellung des Kugelkükens 15 die zentrale Durchgangsbohrung 17 von dem Zuflußkanal 33 abgeschlossen, wobei die Ringdichtungen 22,23 dichtend am Außenumfang des Kugelkükens 15 anliegen.

Das im in der Durchgangsbohrung 17 befindliche Medium kann nun zur Abflußseite hin über die Entlastungsbohrung 19 abfließen, ebenso wird der untere und obere Ringraum 24 mit dem dort befindlichen Medium, welches über den Außenumfang des Kugelkükens in die Durchgangsbohrung 17 abfliesst, über die Durchgangsbohrung 19 abgeleitet.

Wesentliches Merkmal ist also, daß nach der ersten Ausführungsform in Offenstellung ein Nebenflußraum 20 geschaffen wird, der damit verhindert, daß in Offenstellung irgendwelche Toträume vorhanden sind, die nicht gespült sind.

In Figur 7 ist eine zweite Ausführungsform eines Kugelkükens 25 gezeigt. Das dortige Kugelküken entspricht

-7-

in seiner Formgebung mehr einer runden Kugel im Vergleich zu dem Ausführungsbeispiel nach den Figuren 1 - 6, wobei sowohl in Offenstellung als auch in Schließstellung stets eine dichtende Anlage der Dichtringe 22,23 am Außenumfang des Kugelkükens 25 erreicht wird.

Der in Pfeilrichtung 18 eintretende Mediumstrom strömt wiederum durch die Durchgangsbohrung 27 hindurch und strömt zu dem Abflußkanal hinaus. In diesem Fall wird ein ansich geschlossener Ringraum 34 gebildet, der zwischen den Dichtringen 22,23 liegt.
Zur Spülung dieses Ringraumes 34 in Offenstellung sind wiederum Spülkanäle 28,29 vorgesehen, die bevorzugt schräg in Richtung zur Durchströmungsrichtung vom Zuflußkanal 33 in den Ringraum 34 führen. Es erfolgt damit ein Eintritt des Mediums in Pfeilrichtung 31 in den Ringraum und dieser Ringraum wird gespült, wonach das Medium in Pfeilrichtung 32 aus dem gespülten Ringraum 34 wieder heraustritt.

Will man den Ringraum auch in Schließstellung des Kugelkükens 27 spülen, dann findet die gleiche Entlastungsbohrung 19 Anwendung, wie sie inVerbindung mit Fig. 1 und Fig. 2 dargestellt wurde.

Wesentliches Merkmal ist also, daß stets bei einem Absperrorgan beliebiger Formgebung Toträume in Schließ- und Offenstellung nicht abgeschlossen werden, sondern entsprechende Kanäle zum Hauptfluß haben, so daß ein ständiger Spülfluß in diese sonst vorhandenen Toträume stattfindet.

Ein Spüleffekt findet selbstverständlich nur in Offenstellung dieses Kugelkükens oder dieses Kugelhahns statt,

-8-

nicht aber in Schließstellung. In Schließstellung findet nur eine Entlastung des im Totraum befindlichen Mediums und ein langsamer Sickerfluß durch eine entsprechende Entlastungsbohrung statt.

Die Entlastungsbohrung 19 kann selbstverständlich auch an anderer Stelle und in anderer Richtung vorgesehen sein.

Beispielsweise kann sie so angeordnet sein, daß ein vollständiges Absickern des in der Durchgangsbohrung 17 vorhandenen Mediums in Richtung zum Abflußkanal möglich ist.

Der Werkstoff des Kugelkükens 15,25 ist beliebig. Er kann aus Kunststoff oder Metall bestehen.

Statt der Verwendung von zwei Spülkanälen 28,29 kann auch nur ein einziger Spülkanal vorgesehen sein.

Ebenso können gleichartige Spülkanäle auch nach oben hin in den oberen Ringraum 34 vorgesehen werden, wodurch sich noch ein verbesserter Spüleffekt ergibt, obwohl dies nicht notwendig ist, weil der Ringraum 34 oben und unten in Fließverbindung steht.

- 31 -

ZEICHNUNGS-LEGENDE

| | | | |
|---|---|---|---|
| 1 | Gehäuse | 31 | Pfeilrichtung |
| 2 | Hauptteil | 32 | Pfeilrichtung |
| 3 | Ergänzungsteil | 33 | Zuflußkanal |
| 4 | Betätigungshebel | 34 | Ringraum |
| 5 | Befestigungsschraube | | |
| 6 | Schaft | | |
| 7 | Tellerfeder | | |
| 8 | Metallring | | |
| 9 | Dichtpackung | | |
| 10 | Verbindungsflanschschraube | | |
| 11 | Flanschdichtung | | |
| 12 | Zweikant | | |
| 13 | Druckstück | | |
| 14 | Pfeilrichtung | | |
| 15 | Kugelküken | | |
| 16 | Schlitz | | |
| 17 | Durchgangsbohrung | | |
| 18 | Pfeilrichtung | | |
| 19 | Entlastungsbohrung | | |
| 20 | Nebenflußraum | | |
| 21 | Pfeilrichtung | | |
| 22 | Dichtungsring | | |
| 23 | Dichtungsring | | |
| 24 | Ringraum | | |
| 25 | Kugelküken | | |
| 26 | Pfeilrichtung | | |
| 27 | Durchgangsbohrung | | |
| 28 | Spülkanal | | |
| 29 | Spülkanal | | |
| 30 | Deckel | | |

-9-

Patentansprüche

1. Absperrarmatur für aggressive Medien, bestehend aus einem vom Medium durchflossenen Gehäuse, in dessen Durchflußquerschnitt zwischen gehäusefesten Dichtringen abdichtend ein Absperrorgan angeordnet ist und zwischen dem Absperrorgan und dem Gehäuse vom Medium beaufschlagte Toträume vorhanden sind, d a d u r c h g e k e n n z e i c h n e t , daß in der Offenstellung des Absperrorgans ein parallel zum Hauptfluß fließender, den Totraum (Ringraum 24,34) durchspülender Nebenfluß (Pfeilrichtung 21) vorhanden ist.

2. Absperrarmatur nach Anspruch 1, d a d u r c h g e k e n n z e i c h n e t , daß in der Offenstellung das Absperrorgan (Kugelküken 15) mit seinem Außenumfang von den gehäusefesten Dichtringen (22,23) einen Abstand aufweist, und daß durch diesen Abstand bedingt ein Nebenfluß vom Hauptfluß des Mediums erzeugbar ist, welcher den Totraum (Ringraum 20,24,34) durchspült, (Fig. 1).

3. Absperrorgan nach Anspruch 1, d a d u r c h g e k e n n z e i c h n e t , daß in der Offenstellung das Absperrorgan (Kugelküken 25) mit seinem Außenumfang dichtend an den gehäusefesten Dichtringen (22,23) anliegt und daß von der zentralen Durchgangsbohrung (27) des Absperrorgans ausgehende, in den Totraum (Ringraum 34) mündende Spülkanäle (28,29) vorgesehen sind, (Fig. 7).

4. Absperrorgan nach Anspruch 3, d a d u r c h g e k e n n z e i c h n e t , daß der stromaufwärts

-10-

gelegene Spülkanal (28) schräg in Richtung der Medienströmung (Pfeilrichtung 18) geneigt ist, und daß der
stromabwärts gelegene Spülkanal (29) schräg in Gegenrichtung der Mediumströmung (Pfeilrichtung 18) geneigt
ist, (Fig. 7).

5. Absperrarmatur nach einem der Ansprüche 1 - 4,
d a d u r c h   g e k e n n z e i c h n e t , daß
das Absperrorgan ein Kugelküken (15,25) ist.

6. Absperrorgan nach einem der Ansprüche 1 - 4,
d a d u r c h   g e k e n n z e i c h n e t , daß
das Absperrorgan ein Kegelküken oder Zylinderküken
ist.

FIG 1

1/5

011297

FIG 2

FIG 3

FIG 4

T4/11

0112977

FIG 5

FIG 6

FIG 7

33

18

27

31

34

25

32

23 28 34

29 22

5/5

0112977

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A-2 087 517 (XOMOX)<br>* Seite 2, Zeilen 22-30; Figur 5 * | 1,2,5 | F 16 K 5/06 |
| A | DE-B-2 321 072 (ERHARD et al.)<br>* Spalte 1, Zeile 68 - Spalte 2, Zeile 3; Figur 1 * | 1,2,5 | |
| A | DE-C- 719 919 (PLEIGER)<br>* Seite 3, Zeilen 10-14; Figuren 1-3 * | 1,2,6 | |
| A | Patent Abstracts of Japan Band 5, Nr. 119, 31. Juli 1981 & JP-A-56-59067 | | |
| A | US-A-4 117 694 (BELMORE)<br>* Spalte 3, Zeilen 30-32; Figur 3, Position 53 * | 1,3,5 | RECHERCHIERTE SACHGEBIETE (Int. Cl. ³)<br><br>F 16 K 5/00<br>F 16 K 27/00<br>F 16 K 51/00 |
| A | US-A-3 067 978 (NATHO) | | |

Der vorliegende Recherchenbericht wurde für alle Patentansprüche erstellt.

| Recherchenort<br>BERLIN | Abschlußdatum der Recherche<br>05-04-1984 | Prüfer<br>SCHLABBACH M |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82